# EUROPEAN PATENT SPECIFICATION

(11) **EP 3 161 037 B1**
(45) Date of publication and mention of the grant of the patent: **15.08.2018**
(21) Application number: 14745260.1
(22) Date of filing: 26.06.2014
(51) Int. Cl.: C08G 59/68, C08G 59/42, C08L 63/00

(54) **FAST CURING RESIN COMPOSITIONS, MANUFACTURE AND USE THEREOF**
SCHNELL HÄRTENDE HARZZUSAMMENSETZUNGEN, HERSTELLUNG UND VERWENDUNG DAVON
COMPOSITIONS DE RÉSINE À DURCISSEMENT RAPIDE, LEUR FABRICATION ET LEUR UTILISATION

(43) Date of publication of application: 03.05.2017
(73) Proprietor: Dow Global Technologies LLC, Midland, MI 48674 (US)
(72) Inventor: GULYAS, Gyongyi, Lake Jackson, TX 77566 (US); MARKS, Maurice J., Lake Jackson, TX 77566 (US)
(74) Representative: Beck Greener
(86) International application number: PCT/US2014/044230
(87) International publication number: WO 2015/199689

(56) References cited:
- WO-A2-2014/062407
- US-A- 3 689 444
- US-A- 5 789 498

## Description

### FIELD OF THE INVENTION

The present invention relates to a new fast curing resin compositions having unique properties. Among other things, the resins are suitable for use in automotive-related applications.

### INTRODUCTION

As the automotive industry moves towards more fuel efficient cars, one path to reducing fuel usage is to reduce the vehicle weight. However, the weight needs to be reduced without sacrificing vehicle integrity and safety. Reinforced composites such as carbon fiber composites offer a material that is lower density while retaining similar mechanical properties to steel and aluminum. There are many different ways to make reinforced composites. One example is the so-called Resin Transfer Molding. Resin Transfer Molding (RTM) is a method of fabricating high-tech composite structures. RTM uses a closed mold commonly made of aluminum or steel. A fiber "layup" comprised of carbon fabric is placed into the mold. The mold is closed, sealed, heated, and placed under vacuum. Heated resin composition is injected into the mold to impregnate the fiber layup. Having the mold heated and under vacuum assists the resin flow. The mold is then held at a temperature sufficient to cure the resin. Current RTM technology produces lightweight parts with excellent mechanical properties. With these qualities, composite materials are gaining wide use in a variety of structural and non-structural applications.

One of the challenges, however, in traditional methods for the preparation of such composites is that such a manufacturing process is often labor intensive and slow, making the process incompatible with the speed and automation typical in automotive plants. WO 2014/062407 A2 discloses resin compositions comprising an epoxy resin, a hardener, a toughening agent and a catalyst for RTM wherein the objective is to provide a composition exhibiting a long open time followed by a fast cure. In an effort to improve such traditional method of making composite, the present invention provides a new resin composition capable of fast curing and producing a composite with high glass transition temperatures.

### SUMMARY OF THE INVENTION

The present invention provides a new resin composition that comprises a catalyst suitable for epoxide-anhydride resin cure. The resin composition provides enough latency at elevated temperature (e.g., 160° C or higher) and then cures fast, e.g., in 2 to 5 minutes, to enable the use of the resin composition for composite making by RTM. The composite made using the present resin composition in an RTM process typically will have a high glass transition temperature (Tg), e.g., 200° C or higher. The resin composition according to the present invention is defined in claim 1. Preferred embodiments are defined in dependent claims 2-6. A cured composition and a reinforced composite made from the resin composition according to the invention are defined in claims 7 and 8. In a preferred embodiment, the present invention provides a resin composition comprising, based on total weight of the resin composition, 20 to 60 wt % of one or more epoxy resins; 30 to 70 wt % of a hardener; 1 to 25 wt % of a toughening agent; and 0.5 to 8 wt % of a catalyst; wherein the catalyst comprises lower alkyl zinc carboxylate.

In another embodiment, the lower alkyl zinc carboxylate in the resin composition has a chemical structure of Zn(O₂CR₁R₂R₃)₂ x Y H₂O, where R₁ R₂ R₃ can independently be H or C₁-C₄ alkyl radicals to maximum of C₅ total and Y can be 0 to 6. The catalyst in the resin composition may comprise a Zn Acetate-imidazole complex.

In yet another embodiment, the Zn Acetate-imidazole complex in the resin composition was prepared by dissolving zinc acetate in excess amounts of imidazole and the imidazole can be one of 1-methyl-, 1-benzyl-2-methyl-, 2-phenyl-, 2-methyl-, 2-ethyl-4-methylimidazoles, or mixture thereof.

The present invention also provide a cured composition made from the resin composition and a reinforced composite made from the resin composition of the present invention.

### BRIEF DESCRIPTION OF THE FIGURE

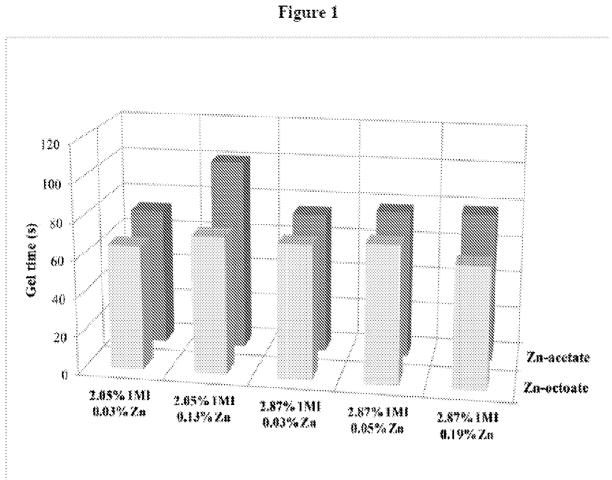

Figure 1 illustrates the comparison of gel times of the resin composition at 160° C with Zn(OAc)₂ and Zn-octoate as catalyst respectively.

### DETAILED DESCRIPTION OF THE INVENTION

Many different epoxy containing resin compositions are known in the industry for the making of CF composites. For example, U.S. 7,005,185 provides some detailed description of epoxy resin compositions and the process of using these resin compositions to make reinforced epoxy films, prepregs, and composites. The epoxy resin compositions typically also include hardener, tougheners, catalysts, fillers, etc.

Many of these known resin compositions may be used in the present invention. For example, based on the total weight of the resin composition, the resin composition of the present invention typically contains a) one or more epoxy resins; b) one or more anhydride hardeners; c) one or more toughening agents; and d) one or more catalysts.

The amount of epoxy resin is preferably 20% or more by weight, more preferably 35% or more by weight, based on weight of the resin composition. The amount of epoxy resin is preferably 70% by weight or less, more preferably 45% by weight or less, based on weight of the resin composition. The amount of anhydride hardener is preferably 30% or more by weight, more preferably 45% or more by weight, based on weight of the resin composition. The amount of anhydride hardener is preferably 70% or less by weight, more preferably 55% or less by weight, based on weight of the resin composition. The amount of toughening agent is preferably 1 % or more by weight, more preferably 5 % or more by weight, based on weight of the resin composition. The amount of toughening agent is preferably 25% or less by weight, more preferably 15% or less by weight, based on weight of the resin composition. The amount of catalyst is preferably 0.5% or more by weight, more preferably 2% or more by weight, based on the weight of the resin composition. The amount of catalyst is preferably 8% or less by weight, more preferably 4% or less by weight, based on the weight of the resin composition.

The epoxy resins useful in the present invention may comprise aliphatic aromatic or cycloalipohatic epoxides and mixtures thereof, with more than one epoxide group per molecule. The epoxy resins may be substituted with substituents not affecting the curing reaction. Particularly suitable epoxy resins for the present invention include ones based on reaction products of polyfunctional alcohols, phenols, aromatic amines, or aminophenols with epichlorohydrin. A few non-limiting examples include bisphenol A diglycidyl ether, bisphenol F diglycidyl ether, resorcinol diglycidyl ether, and triglycidyl ethers of para-aminophenols, cresol novolacs and phenol novolacs. Epoxides of polyvinyl arenes may also be included such as epoxides of divinylbenzene or divinylnaphthalene. It is also possible to use a mixture of two or more epoxy resins.

The epoxy resins component, useful in the present invention for the preparation of the curable compositions, may be selected from commercially available products; for example, D.E.R®. 331, D.E.R.332, D.E.R. 383, D.E.R. 334, D.E.R. 580, D.E.N. ® 431, D.E.N. 438, D.E.R. 354, or D.E.R. 858 epoxy resins available from The Dow Chemical Company. Cycloaliphatic epoxy resins include diepoxides of cycloaliphatic esters, such as 3,4-epoxycyclohexylmethyl 3,4-epoxycyclohexane carboxylate, or Syna™ 21 (available from Synasia).

The carboxylic anhydride curing agent may comprise any substituted or unsubstituted anhydride, such as phthalic anhydride, tetrahydro phthalic anhydride, methyl-tetrahydro phthalic anhydride, hexahydro phthalic anhydride, maleic anhydride, nadic methyl anhydride and mixtures thereof.

Toughening agents may comprise polymeric molecules such as block copolymers, polyether or, polyester polyols and core shell rubber (CSR). Non-limiting example of block copolymers is Fortegra® 100. Examples of the polyether component include polyether polyols, such as polypropylene oxide, polybutylene oxide, and polyethylene oxide. Polyether polyols are available from The Dow Chemical Company as VORANOL® polyols, and from the Bayer Corporation as ACCLAIM® polyols. Polyester polyols are compounds, such as polyethylene adipate, polybutylene adipate, polypropylene adipate, and the like. Examples of commercially available polyester polyols are FOMREZ® polyester polyols from Chemtura, and DIOREZ® polyester polyols from The Dow Chemical Company.

Core shell rubber (CSR), useful in the present invention for the preparation of the curable compositions, may be selected from commercially available products; for example, Paraloid EXL™ 2650A, EXL 2655, EXL2691 A, each available from The Dow Chemical Company, or Kane Ace® MX series from Kaneka Corporation, such as MX 120, MX 125, MX 130, MX 136, MX 551, or METABLEN™ SX-006 available from Mitsubishi Rayon.

Optional components that maybe used in the present invention include components normally used in resin compositions known in the art. For example, the optional components may comprise compounds that can be added to the composition to enhance application properties (e.g., flow modifiers or flow aids), reliability properties (e.g., adhesion promoters) or the selectivity of the catalyst. An assortment of optional additives may be added for example diluents, stabilizers, plasticizers, fibers, internal release agents, and the like, and mixtures or combinations of two or more thereof.

The resin composition of the present invention differs from traditional resin compositions in that a unique catalyst complex is used in the resin composition.

The catalyst used in the present resin composition comprises a Zn(II) catalyst, optionally a catalyst-imidazole mixture. In a preferred embodiment, the Zn(II) catalyst is preferably prepared from a zinc carboxylate, where the carboxylic acid contains a maximum of five carbons. These carboxylates will be referred to herein as lower alkyl zinc carboxylates. Lower alkyl zinc carboxylates typically do not dissolve in epoxy or anhydride components of the resin compositions. However, it can dissolve in excess of 1-methylimidazole (1MI). Optionally, therefore, the present invention includes combining Zn(II) catalyst, preferably a lower alkyl zinc carboxylate, with 1MI. The solubilized lower alkyl zinc carboxylates in 1MI can be mixed with other components, such as hardeners, curing agents (anhydrides) and toughening agents (e.g., polyols, block copolymers or core-shell rubber).

The lower alkyl zinc carboxylate catalysts used in the present invention have the following chemical structure:

Zn(O₂CR₁R₂R₃)₂xYH₂O,

where R₁ R₂ R₃ can independently be H or C₁ - C₄ alkyl radicals to maximum of C₅ total in all R₁R₂R₃ groups. It can be anhydrous or may contain water (hydrate) where Y can range from 0 to 6. In a preferred embodiment of the present invention the lower alkyl zinc carboxylate is, or comprises, zinc acetate (Zn(OAc)₂).

In a preferred embodiment of the present invention, the optional imidazole used in the present invention is a liquid at room temperature. It can be any liquid imidazole that is capable of complexing and solubilizing the lower alkyl zinc carboxylates, such as 1-methyl-, 1-benzyl-2-methyl, 2-ethyl-4-methylimidazoles and 1-(2-canoethyl)-2-phenyl-4,5-di-cyanoethoxymethyl)-imidazole (2PhICN), 1-cyanoethyl-2-methyl imidazole (2MICN) and 1-cyanoethyl-2-ethyl-4(5)-methyl-imidazole (AMI24CN), available from PCI Synthesis. Lower alkyl zinc carboxylates can be solubilized by dissolving the solid crystals in a liquid imidazole using gentle heating (up to 70° C) to form a homogeneous solution. The concentrations are set to avoid solid crystal precipitation upon cooling to ambient temperature. In case precipitates (e.g., crystals) form, they are preferably removed, e.g., by filtration at ambient temperature.

In another embodiment of the present invention lower alkyl zinc carboxylates may be solubilized by homogenizing it with solid imidazoles heated above their melting point. After cooling the imidazole-lower alkyl zinc carboxylate mixture, it can be ground into a fine powder and used as a catalyst in the formulation. Any suitable solid imidazole may be used. Some preferred solid imidazoles include, but are not limited to, the following examples; 2-methylimidazole, 4-methylimidazole, 2-phenylimidazole. An array of commercial imidazoles can be obtained from Air Products under the trade name of Curezol.

When a catalyst-imidazole mixture is prepared, any relative concentrations of the catalyst and imidazole may be used. Some preferred catalyst concentrations include 1 to 30 wt %, preferably 5 to 25 wt % more preferably 10 to 20 wt % based on the total weight of the catalyst solution.

The Zn(OAc)₂-imidazole catalyst of the present invention provides longer gel time, fast curing time of the resin composition, and/or high Tg of the composite made from the resin composition. It is known in the industry that Zn-octoate can be used as catalyst in similar resin compositions. Zn-octoate is a liquid and can easily be mixed into a resin composition. Zn-octoate provides shorter gel time and comparable curing time and Tg to Zn-acetate at the same catalyst concentrations in the resin compositions. However, for the making of carbon fiber (CF) composites using the RTM process, the use of Zn(OAc)₂ is more favorable because of the longer gel time associated with the use of Zn(OAc)₂. When the resin composition is injected into the mold, it has to fill the mold and wet the CF before gelation. Longer gel times provide better processability by allowing proper mold filling and fiber wetting, resulting in a void free composite material. The fast cure times allow for shortening the curing time and in turn shortening the cycle time of CF composite manufacturing.

### EXAMPLES

The present invention is further illustrated by the following non-limiting examples: Testing Methods:
Rheology tests are performed using any method, and are preferably performed using an AR2000 rheometer equipped with electrically heated plates and the measurements are done using disposable, parallel aluminum plates. Plates are preheated to 160° C. Measurements are conducted isothermally at 160° C using 0.3% strain and 1 Hz frequency. Gel times may be determined as the crossover points of the G' (storage modulus) and G"(loss modulus) curves. For this test, the same method as used in Examples 4, 5, and 6 of this application was used.

T_{g} values may be determined by method, and preferably by dynamic mechanical thermal analysis (DMTA). DMTA is conducted by using an advanced rheometric expansion system (ARES G2, TA Instruments). The nominal dimension of the testing specimen is 12.7 mm × 3.0 mm × 40.0 mm. The testing temperature ranges from 20 to 300 °C and with a ramp rate of 3 °C/min. The fixed testing frequency is 1Hz and the strain amplitude is 0.05%. The T_{g} value is reported as the peak of tan δ curve.

Gel time and demold time can be measured by any method, and preferably as follows. A sample of the mixture is poured onto a preheated hot plate (e.g., 160° C). Time is measured from the moment at which the mixture contacts the hot plate surface. A line is scored through the liquid disk periodically, using a pallet knife or similar blade. The gel time is the time after which the liquid material no longer flows into the scored line. Demold time is the time after pouring at which the disk can be removed from the hot plate surface as a solid with a pallet knife.

### Raw Materials:

Syna™ 21, cycloaliphatic epoxy resin, from Synasia, Inc.

D.E.N.™ 438™, epoxy Novolac and D.E.R.™ 331, liquid epoxy resin, are available from The Dow Chemical Company.

Paraloid® EXL 2650A, core shell rubber (CSR) and Voranol® 4000LM polyol, are available from The Dow Chemical Company.

The anhydride hardener, nadic methyl anhydride (NMA), is available from Dixie Chemicals.

Zn-octoate is available from The Dow Chemical Company, and Zn(OAc)₂ from Aldrich.

### Preparation of Samples:

The sample compositions contain the same resin and hardener components etc. Only the catalyst component of the resin composition varies to illustrate the benefit of the present invention. Below is a summary of components of the sample compositions:
Resin composition: 70 wt % of Syna 21, 15 wt % of D.E.N. 438 and 15 wt % of D.E.R. 331, based on the total weight of the resin composition
Hardener: nadic methyl anhydride (NMA), Table 1 lists the amount used.
Toughener: 13 wt % Voranol 4000 LM polyol
Epoxide: anhydride equivalent ratio: 1.05
Catalyst: 1) Zn-(OAc)₂ and 1MI and 2) Zn octoate and 1MI. Zn-(OAc)₂ was used as an 18 wt % Zn(OAc)₂x2H₂O solution in 1MI. At certain 1MI levels, additional 1MI is also used. When Zn-octoate is the catalyst, since it is a liquid, it is directly mixed into the resin composition along with the appropriate amounts of 1MI. For the comparison of the gel times of Zn-(OAc)₂ and Zn-octoate, resin composition are prepared having the same 1MI and the same Zn concentrations regardless of the counter ion (acetate or octoate) of the metal.

### Example 1

### 1. Preparation of resin portion of the composition ("R")

The resin composition is detailed in Table 1. D.E.N. 438 is warmed to 60° C to decrease viscosity, and is transferred to a vessel equipped with mechanical stirring, thermocouple and heating mantle. The rest of the resin components are added and the mixture is stirred at 60° C until the mixture is homogenized.

**Table 1. Resin (R) composition**

| Material | wt. % |
|---|---|
| Syna 21 | 70 |
| D.E.N. 438 | 15 |
| D.E.R. 331 | 15 |

### 2. Catalyst preparation

Zn(OAc)₂x2H₂O (9.00 g) is dissolved in 1MI (41.00 g) using magnetic stirring and heating up to 70 °C to form a solution. The solution is cooled to ambient temperature and used for the hardener preparations. This 18% solution is hereinafter referred to as Zn(OAc)₂-1MI.

### 3. Hardener/toughener preparation

A master batch of NMA and Voranol 4000 LM (hereinafter referred to as "H") is prepared that is to be mixed with the different levels/kinds of catalysts before use. The composition of H is listed in Table 2.

**Table 2. Composition of NMA and toughener (H) master batch**

| Material | wt. % |
|---|---|
| NMA | 78.24 |
| Voranol 4000LM | 21.76 |

Both H components are transferred in a screw cap bottle and mixed with a speed mixer (DAC150.1 FVZ-K, FlackTeK Inc.) at 2500 rpm for 1 minute. This H mixture is then mixed with the appropriate amount of catalysts detailed in Table 3 and 4 and homogenized using the SpeedMixer at 2500 RPM for 1 minute.

**Table 3. H samples for rheological studies using different levels of ZnOAc₂-1MI**

| | Zn wt. % | 1MI wt. % | 1MI (g) | Zn(OAc)₂-1MI (g) | H (g) |
|---|---|---|---|---|---|
| H1 | 0.03 | 2.05 | 1.59 | 0.56 | 97.85 |
| H2 | 0.13 | 2.05 | 0.00 | 2.50 | 97.50 |
| H3 | 0.03 | 2.87 | 2.41 | 0.56 | 97.03 |
| H4 | 0.05 | 2.87 | 2.11 | 0.93 | 96.96 |
| H5 | 0.19 | 2.87 | 0.00 | 3.50 | 96.50 |

**Table 4. H comparative samples for rheological studies using different levels of Zn-octoate (ZnOct) and 1MI**

| | Zn wt. % | 1MI wt. % | 1MI (g) | ZnOct (g) | H (g) |
|---|---|---|---|---|---|
| HA | 0.03 | 2.05 | 2.05 | 0.16 | 97.79 |
| HB | 0.13 | 2.05 | 2.05 | 0.70 | 97.25 |
| HC | 0.03 | 2.87 | 2.87 | 0.16 | 96.97 |
| HD | 0.05 | 2.87 | 2.87 | 0.27 | 96.86 |
| HE | 0.19 | 2.87 | 2.87 | 1.02 | 96.11 |

10 g of compositions HA to HE are weighed into screw cap vials and mixed with various amounts of R resin using the speed mixer at 2500 RPM for 1 minute. The amounts of R used in these samples are summarized in Table 5.

**Table 5. Mixing ratios for 10 g of H1-H5 and HA-HE with R resin**

| | R (g) |
|---|---|
| H1 | 6.64 |
| H2 | 6.62 |
| H3 | 6.58 |
| H4 | 6.58 |
| H5 | 6.55 |
| HA | 6.63 |
| HB | 6.60 |
| HC | 6.58 |
| HD | 6.57 |
| HE | 6.52 |

These samples are measured for their rheology properties, e.g., gel time. Results are presented in Figure 1 and tabulated in Table 6.

**Table 6. Gel times in seconds of Zn-acetate or Zn-octoate 1MI catalyzed resin compositions**

| | 2.05% 1MI 0.03% Zn | 2.05% 1MI 0.13% Zn | 2.87% 1MI 0.03% Zn | 2.87% 1MI 0.05% Zn | 2.87% 1MI 0.19% Zn |
|---|---|---|---|---|---|
| Zn-octoate | 66 | 73 | 71 | 73 | 64 |
| Zn-acetate | 73 | 101 | 75 | 78 | 79 |

Data show that compositions with Zn-acetate catalyst have significantly longer gel times than octoates.

### Example 2

### 1. Curing studies, clear cast preparation

Thermosets are prepared using compositions containing the same R and H components, and the same epoxide anhydride molar ratios (1.05), with only the catalyst amounts/kinds varied. The 1MI concentration is kept about constant at 1.96 wt % of the total resin composition. Two different Zn concentrations are used, i.e., at 0.03 and 0.13 wt % of ZnOAc₂ and in the comparative examples of Zn-octoate. Clear cast samples (the thermoset without carbon fibers) are denoted CC1 and CC2 and comparative samples are denoted CCA and CCB. Catalysts used for the preparations are listed in Table 7.

**Table 7. Catalyst used in sample resin compositions for clear cast preparations**

| Sample | 1MI wt. % | Zn wt. % | Zn source |
|---|---|---|---|
| CC1 | 1.96 | 0.03 | Zn-acetate |
| CC2 | 1.96 | 0.13 | Zn-acetate |
| CCA | 1.96 | 0.03 | Zn-octoate |
| CCB | 1.96 | 0.13 | Zn-octoate |

Thermosets are toughened with 7 wt % of CSR. The CSR is predispersed in NMA before use, using high sheer mixing. A 25 wt % CSR containing master batch of toughening agent in the hardener is prepared and is hereinafter referred to as CSR-NMA.

CSR powder is dispersed in NMA using high shear mixing (Dispermat CNF2, VMA Getzmenn GMBH, Germany) at RT for 2 to 3 hours at 1800 rpm. Dispersion quality is checked by Hegman grind. A 25 wt % CSR-NMA master batch is prepared hereinafter referred to as NMA-M.

Details on the clear cast samples are listed in Table 8 and on the clear cast comparative samples in Table 9.

**Table 8. Composition of clear cast samples**

| | 1MI wt. % | Zn wt. % | R (g) | NMA (g) | CSR-M (g) | Zn(OAc)₂-1MI (g) | 1MI (g) |
|---|---|---|---|---|---|---|---|
| CC1 | 1.96 | 0.03 | 84.15 | 55.71 | 56.00 | 1.12 | 3.02 |
| CC2 | 1.96 | 0.13 | 83.85 | 55.37 | 56.00 | 4.70 | 0.08 |

**Table 9. Composition of clear cast comparative samples**

| | 1MI wt. % | Zn wt. % | R (g) | NMA (g) | CSR-M (g) | ZnOct-1MI (g) | 1MI (g) |
|---|---|---|---|---|---|---|---|
| CCA | 1.96 | 0.03 | 84.10 | 55.66 | 56.00 | 0.32 | 3.92 |
| CCB | 1.96 | 0.13 | 83.62 | 55.10 | 56.00 | 1.36 | 3.92 |

To prepare clear casts, composition components listed in Table 7 and Table 8 are added to a 3-necked round bottomed flask. The composition is degassed under vacuum at 60° C for 15 to 20 min. under slow mechanical stirring. When bubbling subsides the degassed composition is then transferred into a steel mold assembly which is preheated to 160 °C. Filled molds are placed into a 160° C convection oven and cured for 5 minutes. After curing, the mold is quickly removed from the oven and disassembled right away. The cured clear cast is placed between two room temperature steel sheets and cooled to ambient temperature. It is cut in half, and one half is post cured at 200° C for 20 minutes between two preheated steel plates. When cure time is completed it is removed from the oven and cooled between two room temperature steel plates. The Tg of each piece is measured by dynamic mechanical thermal analysis (DMTA).

### 2. Mold preparation and testing

The molds are U-shaped, 1/8 inch thick aluminum spacer, positioned between two sheets of Duo-foil aluminum and compressed between two 14" x 14" x 0.5" stainless steel plates. The Duo-foil, (0.020 inch thickness, uncoated) is coated with Frekote 700NC mould release (available from Northern Composites). A 3/16 inch outside diameter rubber tubing is used for gasket material following the inside dimensions of the spacer. Once assembled, the mold is clamped together with large C-clamps. The open end of the U-shaped spacer faces upward, and the Duo-foil extends to the edge of the metal plates. The mold is placed in a convection oven at 160° C for at least 2 hours to prewarm them before use.

As shown in Table 10, all Zn(OAc)₂ and Zn-octoate catalyzed samples have similar high Tg values and fracture behavior, indicating similar extent of curing. Even if the gel time of the acetate containing compositions were longer, their cure times are comparable to that of the octoates containing compositions, resulting in the same thermoset Tg values. The Zn-acetate-imidazole catalyst can be advantageous at CF composite preparations since it provides more time for adequate mold filling and fiber wetting. It will cure fast and provides high Tg and high onset Tg. The high onset Tg is an indicator that the manufactured piece will be solid when taken out of the mold and will not bend or warp. This composition is suitable for the use of the preparation of fast curing, high Tg CF composites by RTM.

**Table 10. Thermal and mechanical properties clear cast examples and comparative examples: Zn acetate (OAc) vs. Zn octoate (Oct).**

| Example | Zn% | 1MI% | Anion | Cure (°C) | Onset Tg (°C) | Tg (°C) | K_{IC} (MPs√m) | St. Dev |
|---|---|---|---|---|---|---|---|---|
| CC1 | 0.13 | 1.96 | OAc | 160 | 210 | 221 | 0.99 | 0.04 |
| CC1PC | 0.13 | 1.96 | OAc | 200 | 215 | 225 | 0.96 | 0.08 |
| CC2 | 0.03 | 1.96 | OAc | 160 | 213 | 222 | 1.00 | 0.07 |
| CC2PC | 0.03 | 1.96 | OAc | 200 | 216 | 226 | 0.88 | 0.10 |
| CCA | 0.13 | 1.96 | Oct | 160 | 209 | 221 | 1.01 | 0.05 |
| CCA PC | 0.13 | 1.96 | Oct | 200 | 213 | 224 | 0.99 | 0.07 |
| CCB | 0.03 | 1.96 | Oct | 160 | 214 | 223 | 1.00 | 0.07 |
| CCB PC | 0.03 | 1.96 | Oct | 200 | 215 | 227 | 0.93 | 0.06 |

| | | | | | | | | |
|---|---|---|---|---|---|---|---|---|
| PC: post cured K_{IC}: fracture toughness | | | | | | | | |

### Example 3

RTM experiments are carried out utilizing a KraussMaffei high-pressure injection machine, Rim Star RTM 4 / 4. The machine is equipped with heated raw material tanks (resin RT to 120 °C, hardener RT to 90 °C, internal mold release RT to 40 °C) and high pressure capable lines (temperature capability up to 130 °C) leading to a high-pressure hydraulic mixing head with high precision metering capability (also capable of metering the internal release agent by means of a nozzle module on the mixing head) and an output rate potential of 15 to 133 g/s. Target mix head pressure Resin 80 bar, hardener 80 bar. Gel time experiments, clear cast plates and carbon fiber composites are produced with an injection flow rate of rate of 20 to 35 g/s. Ideal raw material tank temperatures are set as follows: Resin 80 °C, hardener 40 °C, internal mold release 30 °C.

Resin mixture A-1 is prepared from 15 wt % DEN-438, 15 wt % DER-331, and 70 wt % Syna21. Hardener mixtures B-0 (comparative, using a Cr(III) catalyst) and B-1 are prepared as shown in Table 11 (in wt %).

**Table 11**

| | B-0 | B-1 |
|---|---|---|
| NMA | 85 | 84.69 |
| CSR | 11.4 | 12.11 |
| Hycat 3000S | 1.8 | - |
| Zn(OAc)₂·2H₂O | - | 0.17 |
| 1MI | 1.8 | 3.03 |

The above procedure is performed on two mixtures: A-1/B-0, and A-1/B-1 to obtain e.g., epoxide:anhydride ratios of 1.05 mol/mol. External mold release Mikon W-31+ is used. Results are shown in Table 12. Other properties of the composite (90°) and clear cast are shown in Table 13.

**Table 12**

| | A-1 and B-0 (comparative) | A-1 and B-1 |
|---|---|---|
| total shotweight (g) | 325 | 325 |
| shot time (s) | 25 | 292 |
| weight ratio resin:hardener | 100:131 | 100:137 |
| total (g/s) | 13.0 | 20.0 |
| resin temp (°C) | 80.0 | 80.0 |
| hardener temp (°C) | 40.0 | 40.0 |
| demold time (s) | 240 | 120 |
| mold temp above (°C) | 160 | 160 |
| mold temp below (°C) | 160 | 160 |
| carbon fiber type | Panex UD300 (Zoltek) | CF300E05A (AKSA) |
| gel time (s) | 60 | 86 |
| Tg (°C) | 219 | 219 |
| odor level | low | low |

**Table 13**

| | | |
|---|---|---|
| Composite 90° | A-1 and B-0 | A-1 and B-1 |
| | (4 min demold time, 2mm thickness) | (2 min, 2 mm) |
| Modulus (MPa) | 6800 | 6875 |
| Strength (MPa) | 48 | 48 |
| Elongation (%) | 1.04 | 1.10 |
| ILSS (MPa) | 68 | 68 |
| Clear Cast | A-1 and B-0 | A-1 and B-1 |
| | (4 min, 2mm) | (3 min, 2 mm) |
| Modulus (MPa) | 2911 | 2852 |
| Strength (MPa) | 56 | 55 |
| Elongation (%) | 3.38 | 3.38 |

### Examples 4-13

Additional runs are performed on the mixture of A-1' and B-1. Examples 4 to 6 are gel time (GT) experiments, Examples 7 and 8 are clear cast (CC) molding experiments, and Examples 9 to 13 are carbon fiber composite (CFC) molding experiments. The CFC experiments use Aksa/Mety CF300E05A (6 ply, UD 0), for a total of 292 g of fabric. Resin mixture A-1' of Examples 4 to 13 comprises an internal mold release (IMR) (Axel INT-1882) in the amount of 3.5 parts by weight per 100 part by weight of A-1. Examples 4 to 13 also use an external mold release (Mikon 31+; 1:1). The weight ratios of A-1':B-1:IMR are 100:137:3.5. Plate temperature (for GT) and mold temperature (for CC and CFC) is 160° C. Other information and results are shown in Table 14.

**Table 14**

| Example | de-mold time (min) | shot weight | |
|---|---|---|---|
| 4 (GT) | 3 | 100 g at 20g/s | gel time = 86 s |
| 5 (GT) | 3 | 100 g at 20g/s | gel time = 86 s |
| 6 (GT) | 3 | 100 g at 20g/s | gel time = 86 s |
| 7 (CC) | 4 | 430 g at 20g/s | clamp force=120 ton |
| 8 (CC) | 3 | 430 g at 20g/s | clamp force=120 ton |
| 9 (CFC) | 4 | 430 g at 20g/s | clamp force=120 ton |
| 10 (CFC) | 3 | 275 g at 20g/s | clamp force=120 ton* |
| 11 (CFC) | 2 | 275 g at 20g/s | clamp force=120 ton* |
| 12 (CFC) | 3 | 275 g at 20g/s | clamp force=120 ton* |
| 13 (CFC) | 3 | 275 g at 20g/s | clamp force=120 ton* |

| | | | |
|---|---|---|---|
| * clamping force is 50 tons during injection, then raised to 120 tons after injection. | | | |

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

The foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation.

## Claims

1. A resin composition comprising, based on total weight of the resin composition,
a. one or more epoxy resins;
b. a hardener;
c. a toughening agent; and
d. a catalyst comprising a lower alkyl zinc carboxylate, wherein the carboxylate contains a maximum of five carbons.

2. The resin composition of claim 1, comprising, based on total weight of the resin composition,
a. 20-60 wt% of the one or more epoxy resins;
b. 30-70 wt% of the hardener;
c. 1-25 wt% of the toughening agent; and
d. 0.5-8 wt% of the lower alkyl zinc carboxylate catalyst.

3. The resin composition of claims 1 or 2, wherein the lower alkyl zinc carboxylate has a chemical structure of Zn(O₂CR₁R₂R₃)₂ x Y H₂O, where R₁ R₂ R₃ can independently be H or C₁-C₄ alkyl radicals to maximum of C₅ total, and Y can be 0-6.

4. The resin composition of any one of the preceding claims wherein the catalyst comprises zinc acetate.

5. The resin composition of any of the preceding claims, wherein the catalyst comprises a zinc acetate-imidazole complex.

6. The resin composition of claim 5, wherein the imidazole is one of 1-methyl-, 1-benzyl-2-methyl-, 2-phenyl-, 2-methyl-, 2-ethyl-4-methylimidazoles, or mixture thereof.

7. A cured composition made from the resin composition of claims 1 to 6.

8. A reinforced composite made from the resin composition of claims 1 to 6.

## Patentansprüche

1. Eine Harzzusammensetzung, die bezogen auf das Gesamtgewicht der Harzzusammensetzung Folgendes beinhaltet:
a. ein oder mehrere Epoxidharze;
b. ein Härtungsmittel;
c. einen Schlagzähigkeitsverbesserer; und
d. einen Katalysator, der ein Niederalkyl-Zinkcarboxylat beinhaltet, wobei das Carboxylat maximal fünf Kohlenstoffe enthält.

2. Harzzusammensetzung gemäß Anspruch 1, die bezogen auf das Gesamtgewicht der Harzzusammensetzung Folgendes beinhaltet:
a. zu 20-60 Gew.-% das eine oder die mehreren Epoxidharze;
b. zu 30-70 Gew.-% das Härtungsmittel;
c. zu 1-25 Gew.-% den Schlagzähigkeitsverbesserer; und
d. zu 0,5-8 Gew.-% den Niederalkyl-Zinkcarboxylat-Katalysator.

3. Harzzusammensetzung gemäß den Ansprüchen 1 oder 2, wobei das Niederalkyl-Zinkcarboxylat eine chemische Struktur von Zn(O₂CR₁R₂R₃)₂ x Y H₂O aufweist, wobei R₁ R₂ R₃ unabhängig H oder C₁-C₄-Alkylreste mit insgesamt maximal C₅ sein können und Y 0-6 sein kann.

4. Harzzusammensetzung gemäß einem der vorhergehenden Ansprüche, wobei der Katalysator Zinkacetat beinhaltet.

5. Harzzusammensetzung gemäß einem der vorhergehenden Ansprüche, wobei der Katalysator einen Zinkacetat-Imidazol-Komplex beinhaltet.

6. Harzzusammensetzung gemäß Anspruch 5, wobei das Imidazol eines von 1-Methyl-, 1-Benzyl-2-methyl-, 2-Phenyl-, 2-Methyl-, 2-Ethyl-4-methylimidazolen oder eine Mischung davon ist.

7. Eine ausgehärtete Zusammensetzung, die aus der Harzzusammensetzung gemäß den Ansprüchen 1 bis 6 hergestellt ist.

8. Ein verstärkter Verbundstoff, der aus der Harzzusammensetzung gemäß den Ansprüchen 1 bis 6 hergestellt ist.

## Revendications

1. Une composition de résine comprenant, rapporté au poids total de la composition de résine,
a. une ou plusieurs résines époxy ;
b. un durcisseur ;
c. un agent améliorant la ténacité ; et
d. un catalyseur comprenant un alkyl zinc carboxylate inférieur, le carboxylate contenant un maximum de cinq carbones.

2. La composition de résine de la revendication 1, comprenant, rapporté au poids total de la composition de résine,
a. de 20 à 60 % en poids de cette ou ces résines époxy ;
b. de 30 à 70 % en poids du durcisseur ;
c. de 1 à 25 % en poids de l'agent améliorant la ténacité ; et
d. de 0,5 à 8 % en poids du catalyseur alkyl zinc carboxylate inférieur.

3. La composition de résine des revendications 1 ou 2, dans laquelle l'alkyl zinc carboxylate inférieur a une structure chimique de Zn(O₂CR₁R₂R₃)₂ x Y H₂O, où R₁ R₂ R₃ peuvent indépendamment être H ou des radicaux alkyle en C₁-C₄ jusqu'à un maximum de C₅ au total, et Y peut valoir de 0 à 6.

4. La composition de résine de n'importe laquelle des revendications précédentes dans laquelle le catalyseur comprend de l'acétate de zinc.

5. La composition de résine de n'importe lesquelles des revendications précédentes, dans laquelle le catalyseur comprend un complexe acétate de zinc-imidazole.

6. La composition de résine de la revendication 5, dans laquelle l'imidazole est un élément parmi des 1-méthyl-, 1-benzyl-2-méthyl-, 2-phényl-, 2-méthyl-, 2-éthyl-4-méthylimidazoles, ou un mélange de ceux-ci.

7. Une composition durcie fabriquée à partir de la composition de résine des revendications 1 à 6.

8. Un composite renforcé fabriqué à partir de la composition de résine des revendications 1 à 6.
